# EUROPEAN PATENT SPECIFICATION

(11) **EP 3 271 424 B1**
(45) Date of publication and mention of the grant of the patent: **07.06.2023**
(21) Application number: 16710099.9
(22) Date of filing: 15.03.2016
(51) Int. Cl.: C09B 31/18, C09B 67/22, C09D 11/328, D06P 1/06

(54) **TRISAZO ACID DYES**
TRISAZOSÄUREFARBSTOFFE
COLORANTS D'ACIDE TRISAZO

(30) Priority: 16.03.2015 EP 15000774
(43) Date of publication of application: 24.01.2018
(73) Proprietor: Archroma IP GmbH, 4153 Reinach (CH)
(72) Inventor: NUSSER, Rainer, 79395 Neuenburg am Rhein (DE)
(74) Representative: Ricker, Mathias
(86) International application number: PCT/EP2016/000464
(87) International publication number: WO 2016/146257

(56) References cited:
- EP-A1- 0 490 195
- EP-A1- 2 457 955
- EP-A2- 0 422 668
- WO-A1-2013/056838

## Description

### FIELD OF THE INVENTION

The invention relates to novel trisazo acid dyes, a process for the preparation thereof, and use thereof in a dyeing process or a printing process.

### BACKGROUND OF THE INVENTION

Trisazo acid dyes are known in the art.

WO 2013/056838 A1 relates to trisazo dyes of the following formula 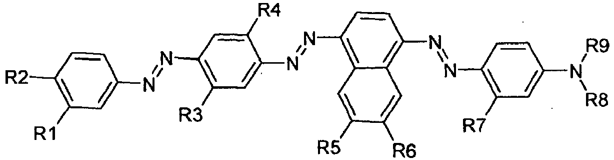 wherein the residues have the meaning as defined in said document. The dyes are particularly suitable for dyeing fibrous material, which contains or consists of natural or synthetic polyamide, in blue, violet or black shades.

EP 2 457 955 A1 relates to trisazo dyes of the following formula 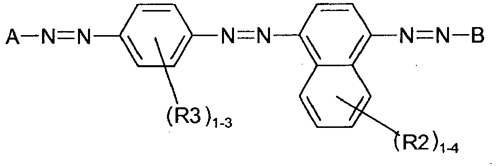 wherein the three azo groups are linked by aromatic structures such as benzene and/or naphthalene groups as defined in said document. The dyes are particularly suitable for making paper or paper board in brownish shades.

EP 0 490 195 A1 relates to an ink comprising at least water, a water-soluble organic solvent and a dye, the dye comprising a solvent represented by the general following formula 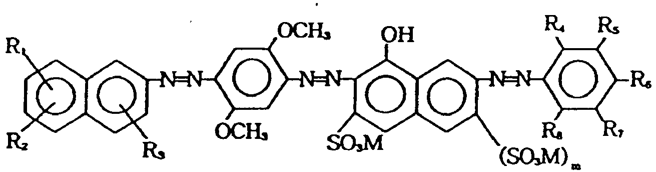 wherein the residues have the meaning as defined in said document. The dyes are suitable to be used in ink-jet printing.

EP 0 422 668 A2 relates to a recording liquid containing a solvent and at least one dye represented by the following formula 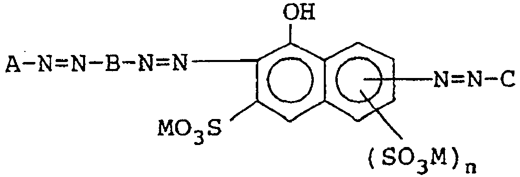 wherein A represents a substituted or unsubstituted phenyl or naphthyl group, B represents a substituted or unsubstituted naphthylene group, and C represents a substituted phenyl, pyridyl or pyrimidinyl group as defined in said document, and to an ink-jet recording method employing the recording liquid.

### OBJECT OF THE INVENTION

There is still an ongoing need for trisazo acid dyes that have improved properties, such as dye levelness (i.e. the uniformity of color shade along the substrate to be dyed), color fastness (light and wet/wash fastness, i.e. the resistance of the color to fading and running when exposed to light and wetness), and build-up behavior. Moreover, there is an ongoing need for blue trisazo dyes, which, when mixed with a red and a yellow dye to give a desired color, can be used in a trichromatic printing or dyeing process.

### SUMMARY OF THE INVENTION

The invention relates to a compound of formula (I) 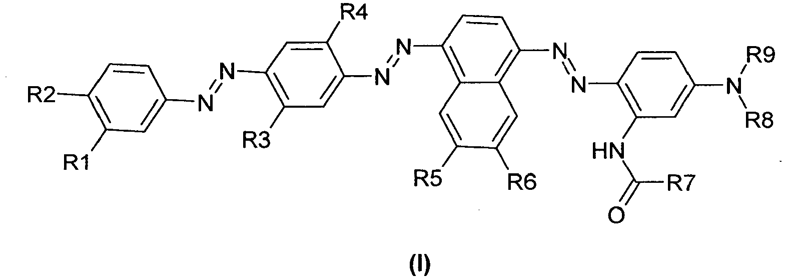 wherein
- R¹: signifies hydrogen, unbranched C₁-C₆-alkyl or branched C₃-C₆-alkyl, SO₃Y, or SO₂CH₂CH₂OH,
- R²: signifies hydrogen, unbranched C₁-C₆-alkyl or branched C₃-C₆-alkyl, SO₃Y, SO₂CH₂CH₂OH, or-NHCH₂CH₂OH,
- R³ and R⁴: signify independently from each other hydrogen, unbranched C₁-C₆-alkyl or branched C₃-C₆-alkyl, unbranched C₁-C₆-alkoxy or branched C₃-C₆-alkoxy,
- R⁵: signifies hydrogen or SO₃Y,
- R⁶: signifies hydrogen or SO₃Y,
- R⁷: signifies hydrogen, unbranched C₁-C₆-alkyl or branched C₃-C₆-alkyl , phenyl, or unbranched C₁-C₁₂-alkoxy, or branched C₃-C₁₂-alkoxy, or NH₂,
- R⁸ and R⁹: signify independently from each other unbranched C₁-C₆-alkyl or branched C₃-C₆-alkyl, or aryl, or -(CH₂)ₙ-aryl with n = 1, 2, 3 or 4;

wherein Y signifies H⁺ or an alkali metal cation, preferably Na⁺ or K⁺; and
wherein said compound of formula (I) contains at least one SO₃Y group.

In one embodiment, the compound of formula (I) contains two, or three SO₃Y-groups, preferably two SO₃Y-groups.

In one embodiment, R¹ signifies hydrogen or SO₃Y or SO₂CH₂CH₂OH.

In one embodiment, R² signifies hydrogen, SO₃Y or -NHCH₂CH₂OH.

In one embodiment, R³ and R⁴ signify independently of one another hydrogen, or unbranched C₁-C₄-alkyl, or branched C₃-C₄-alkyl.

In one embodiment, R⁷ signifies hydrogen, or NH₂, or unbranched C₁-C₄-alkyl, or branched C₃-C₄-alkyl. Preferably, R⁷ signifies methyl or ethyl.

In one embodiment, R⁸ signifies -(CH₂)ₙ-phenyl, wherein n = 1, 2, 3 or 4; or-(CH₂)ₙ-naphthyl, wherein n = 1, 2, 3 or 4 .

In one embodiment, R⁸ signifies a -(CH₂)₁₋₂-phenyl group, or a -(CH₂)₁₋₂-phenyl group wherein the phenyl radical is substituted with one SO₃Y group or with one nitro group.

In one embodiment, R⁹ signifies unbranched C₁-C₄-alkyl, or branched C₃-C₄-alkyl.

In one embodiment,
- R¹: signifies hydrogen or SO₃Y or SO₂CH₂CH₂OH;
- R²: signifies hydrogen, SO₃Y or SO₂CH₂CH₂OH or -NHCH₂CH₂OH;
- R³ and R⁴: signify independently of each other hydrogen, methyl or methoxy;
- R⁵: signifies hydrogen or SO₃Y;
- R⁶: signifies hydrogen or SO₃Y;
- R⁷: signifies hydrogen or methyl;
- R⁸: signifies -(CH₂)ₙ₋phenyl or -(CH₂)ₙ-phenyl substituted with SO₃Y, wherein n = 1,2;
- R⁹: signifies methyl or ethyl;
with the proviso that R⁵ and R⁶ do not both signify SO₃Y at the same time.

In one embodiment, said unbranched C₁-C₆-alkyl groups or branched C₃-C₆-alkyl groups as defined with respect to R¹, R², R³ or R⁴, R⁷, or R⁸ and R⁹, or said unbranched C₁-C₆-alkoxy or branched C₃-C₆-alkoxy as defined with respect to R³ and R⁴, or said unbranched C₁-C₁₂-alkoxy or branched C₃-C₁₂-alkoxy as defined with respect to R⁷ may independently from one another bear one or more substituents selected from hydroxyl groups or cyano groups.

In one embodiment, said phenyl group as defined with respect to R⁷ may be substituted with one or more of C₁-C₄-alkyl, C₁-C₄-alkoxy, halogen or nitro.

The invention further relates to a process for preparing a compound defined in formula (I), wherein the process comprises a compound of formula **(II)** 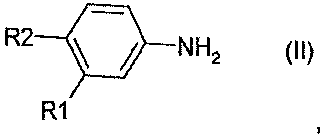 being diazotized and coupled onto one equivalent of a compound of formula **(III),** 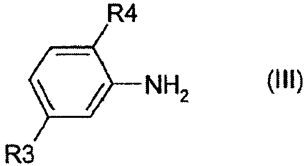 the resulting amine of formula (IV) 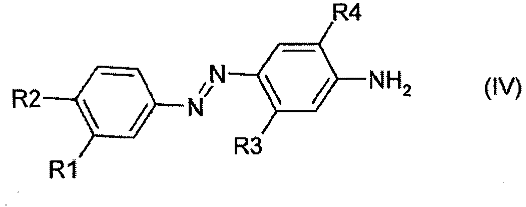 being diazotized and coupled onto one equivalent of a compound of formula **(V)** 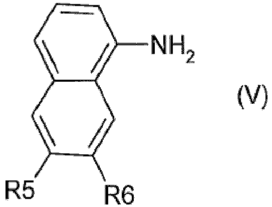 and the resulting amine of formula **(VI)** 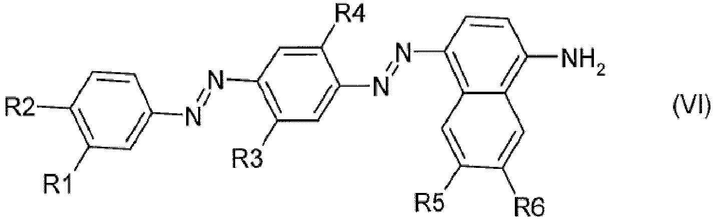 being diazotized and coupled onto one equivalent of a compound of formula (VII) 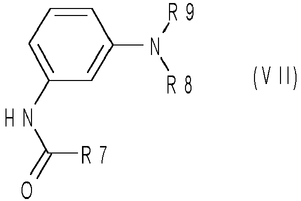 wherein the R¹ to R⁹ radicals are each as defined with respect to formula (I).

The invention further relates to the use of a compound as defined in formula **(I)** in a dyeing process or a printing process, preferably a process for dyeing or printing a substrate, in particular a fibrous substrate, preferably of fibrous material comprising or consisting of at least one natural polyamide, preferably selected from wool or silk, or at least one synthetic polyamide, preferably selected from nylon or mixtures thereof.

In one embodiment, a compound as defined in formula **(I)** is used as blue component in a trichromatic dyeing or trichromatic printing process.

The invention further relates to a process for dyeing or printing a substrate, wherein the process is a trichromatic dyeing or trichromatic printing process for the manufacturing of a color-containing substrate, wherein the blue component used in the trichromatic dyeing or trichromatic printing process is a compound as defined in formula (I).

The invention further relates to a colour-containing substrate prepared according to the process for dyeing or printing a substrate.

The invention further relates to a dye composition, comprising at least one compound of formula (I), preferably a blue dye.

In one embodiment, the composition further comprises a yellow and a red dye.

The invention also extends to the following items 1 to 15:
1. Compound of formula **(I)** 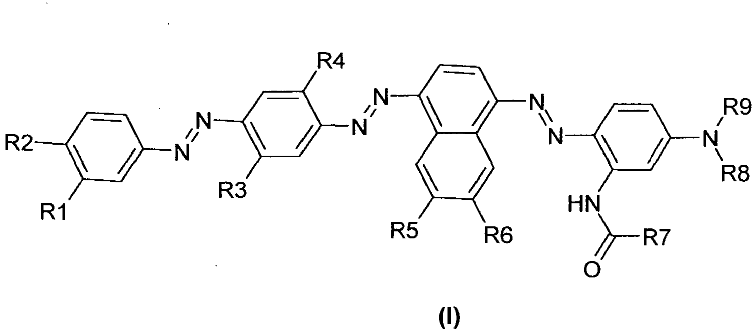 and mixtures thereof
   wherein
   - R¹: signifies hydrogen, unsubstituted unbranched C₁-C₆-alkyl or unsubstituted branched C₃-C₆-alkyl, or substituted unbranched C₁-C₆-alkyl or substituted branched C₃-C₆-alkyl, or SO₃Y, or SO₂CH₂CH₂OH,
   - R²: signifies hydrogen, unsubstituted unbranched C₁-C₆-alkyl or unsubstituted branched C₃-C₆-alkyl, or substituted unbranched C₁-C₆-alkyl or substituted branched C₃-C₆-alkyl, SO₃Y, or SO₂CH₂CH₂OH, or -NHCH₂CH₂OH,
   - R³ and R⁴: signify independently from each other hydrogen, unsubstituted unbranched C₁-C₆-alkyl or unsubstituted branched C₃-C₆-alkyl, or substituted, unbranched C₁-C₆-alkyl or substituted branched C₃-C₆-alkyl, unsubstituted unbranched C₁-C₆-alkoxy or unsubstituted branched C₃-C₆-alkoxy, or substituted unbranched C₁-C₆-alkoxy or substituted branched C₃-C₆-alkoxy,
   - R⁵: signifies hydrogen or SO₃Y,
   - R⁶: signifies hydrogen or SO₃Y,
   - R⁷: signifies hydrogen, unsubstituted unbranched C₁-C₆-alkyl or unsubstituted branched C₃-C₆-alkyl, or substituted unbranched C₁-C₆-alkyl or substituted branched C₃-C₆-alkyl, substituted or unsubstituted phenyl, or unsubstituted unbranched C₁-C₁₂-alkoxy, or unsubstituted branched C₃-C₁₂-alkoxy, or substituted unbranched C₁-C₁₂-alkoxy, or substituted branched C₃-C₁₂-alkoxy, or NH₂,
   - R⁸ and R⁹: signify independently from each other unsubstituted unbranched C₁-C₆-alkyl or unsubstituted branched C₃-C₆-alkyl, or substituted unbranched C₁-C₆ alkyl or substituted branched C₃-C₆-alkyl, or aryl, or -(CH₂)ₙ-aryl with n = 1, 2, 3 or 4, where the aryl radicals may be substituted;

   wherein Y signifies H⁺ or an alkali metal cation, preferably Na⁺ or K⁺; and
   wherein said compound of formula **(I)** contains at least one anionic group.
2. Compound according to item 1, wherein the compound of formula **(I)** contains one, or two, or three anionic groups, more preferably two SOsY-groups.
3. Compound according to at least one of the preceding items 1 or 2, wherein R' signifies hydrogen or SO₃Y, or SO₂CH₂CH₂OH.
4. Compound according to at least one of the preceding items 1 to 3, wherein R² signifies hydrogen, SO₃Y, or -NHCH₂CH₂OH.
5. Compound according to at least one of the preceding items 1 to 4, wherein R³ and R⁴ signify independently of other hydrogen, or unsubstituted unbranched C₁-C₄-alkyl, or unsubstituted branched C₃-C₄-alkyl, or substituted unbranched C₁-C₄-alkyl, or substituted branched C₃-C₄-alkyl.
6. Compound according to at least one of the preceding items 1 to 5, wherein R⁷ signifies hydrogen, or NH₂, or unsubstituted unbranched C₁-C₄-alkyl, or unsubstituted branched C₃-C₄-alkyl, or substituted unbranched C₁-C₄-alkyl, or substituted branched C₃-C₄-alkyl, preferably methyl or ethyl.
7. Compound according to at least one of the preceding items 1 to 6, wherein R⁸ signifies substituted or unsubstituted -(CH₂)ₙ-phenyl, wherein n = 1, 2, 3 or 4; or substituted or unsubstituted -(CH₂)ₙ-naphthyl, wherein n = 1, 2, 3 or 4 .
8. Compound according to at least one of the preceding items 1 to 7, wherein R⁸ signifies a -(CH₂)₁₋₂-phenyl group, or a -(CH₂)₁₋₂-phenyl group wherein the phenyl radical is substituted with one SO₃Y or with one nitro group.
9. Compound according to at least one of the preceding items 1 to 8, wherein R⁹ signifies unsubstituted unbranched C₁-C₄-alkyl, or unsubstituted branched C₃-C₄-alkyl, or substituted unbranched C₁-C₄-alkyl, or substituted branched C₃-C₄-alkyl.
10. Compound according to at least one of the preceding items 1 to 9, wherein
   - R¹: signifies hydrogen or SO₃Y or SO₂CH₂CH₂OH;
   - R²: signifies hydrogen, SO₃Y, or SO₂CH₂CH₂OH or -NHCH₂CH₂OH;
   - R³ and R⁴: signify independently of each other hydrogen, methyl or methoxy;
   - R⁵: signifies hydrogen or SO₃Y;
   - R⁶: signifies hydrogen or SO₃Y;
   - R⁷: signifies hydrogen or methyl;
   - R⁸: signifies -(CH₂)ₙ-phenyl or -(CH₂)ₙ-phenyl substituted with SO₃Y, wherein n = 1, 2;
   - R⁹: signifies methyl or ethyl;
   with the proviso that R⁵ and R⁶ do not both signify SO₃Y at the same time.
11. A process for preparing a compound according to at least one of the preceding items 1 to 10, wherein the process comprises a compound of formula **(II)** 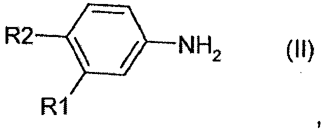 being diazotized and coupled onto one equivalent of a compound of formula **(III),** 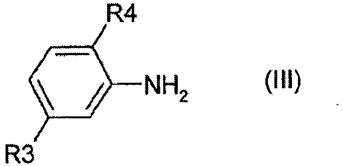 the resulting amine of formula (IV) 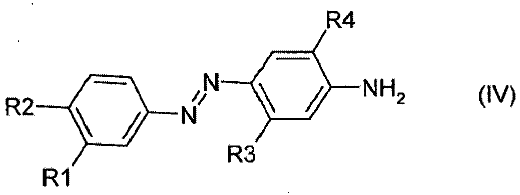 being diazotized and coupled onto one equivalent of a compound of formula **(V)** 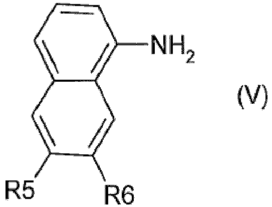 and the resulting amine of formula **(VI)** 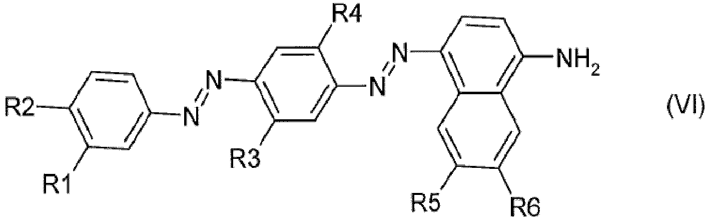 being diazotized and coupled onto one equivalent of a compound of formula **(VII)** 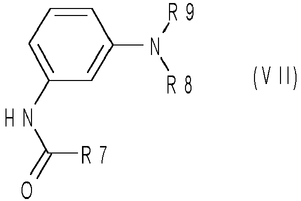 wherein the R¹ to R⁹ radicals are each as defined in at least one of the preceding claims 1 to 10.
12. Use of a compound according to at least one of the preceding items 1 to 10 in a dyeing process or a printing process, preferably a process for dyeing or printing a substrate, in particular a fibrous substrate, preferably of fibrous material comprising or consisting of at least one natural polyamide, preferably selected from wool or silk, or at least one synthetic polyamide, preferably selected from nylon or mixtures thereof.
13. Use according to item 12, wherein a compound according to at least one of the preceding items 1 to 10 is used as blue component in a trichromatic dyeing or trichromatic printing process.
14. Process for dyeing or printing a substrate, wherein the process is a trichromatic dyeing or trichromatic printing process for the manufacturing of a color-containing substrate, wherein the blue component used in the trichromatic dyeing or trichromatic printing process is a compound according to at least one of the preceding items 1 to 10.
15. Colour-containing substrate prepared according to the process according to item 14.

### DETAILED DESCRIPTION OF THE INVENTION

The SO₃Y group in the compound of formula (**I**) may be termed as an anionic group. This group is capable of forming a SO₃⁻ group as an anion. Suitable counterions Y⁺ are preferably H⁺, or alkali metal ions such as Na⁺ and K⁺ ions, or earth alkali metal ions such as Ca²⁺ and Mg²⁺ ions, or ammonia cation.

Although the compounds of formula **(I)** may contain more than one or two SO₃Y groups, it is preferred that said compounds contain two SO₃Y groups.

In one embodiment, said unbranched C₁-C₆-alkyl groups or branched C₃-C₆-alkyl groups as defined with respect to R¹, R², R³ or R⁴, or R⁷, or R⁸ and R⁹, or said unbranched C₁-C₆-alkoxy or branched C₃-C₆-alkoxy as defined with respect to R³ and R⁴, or said unbranched C₁-C₁₂-alkoxy, or branched C₃-C₁₂-alkoxy as defined with respect to R⁷ may independently from one another bear one or more substituents selected from hydroxyl groups, cyano groups, amino groups, nitro groups, halogen groups or aryl groups, preferably phenyl groups.

Preferably, the substituents of the branched C₃-C₆-alkyl groups or unbranched C₁-C₆-alkyl groups and of the unbranched C₁-C₆-alkoxy groups or branched C₃-C₆-alkoxy groups are hydroxyl groups, cyano groups, amino groups, nitro groups, halogen groups or aryl groups, preferably phenyl groups.

Methyl, ethyl, propyl are preferred C₁-C₃ alkyl groups, wherein methyl and ethyl are particularly preferred. Methoxy and ethoxy are preferred C₁-C₂ alkoxy groups, wherein methoxy is particularly preferred.

Preferably, aryl is phenyl or naphthyl.

In one embodiment, said phenyl group as defined with respect to R⁷ may be substituted with one or more of C₁-C₄-alkyl groups, C₁-C₄-alkoxy groups, halogen or nitro groups.

Thus, in the meaning of the invention, terms such as *"unbranched C₁-C₆-alkyl, branched C₃-C₆*-alkyl, *unbranched C₁-C₆-alkoxy, branched* C₃-C₆-alkoxy, *unbranched C₁*-*C₁₂-alkoxy, or branched C₃-C₁₂-alkoxy, phenyl"* include both the respective unsubstituted groups as well as the groups bearing the substituents defined herein.

The compounds of the above-defined formula **(I)** may be prepared by suitable diazotation and coupling reactions. Diazotization and coupling conditions can be chosen by analogy with customary diazotization and coupling reactions.

For diazotization, for example, the particular amine is cooled down to 0 - 10 °C, preferably to 0 - 5 °C, and diazotized by addition of nitrosylsulfuric acid or sodium nitrite. Thereafter, the diazotized amine is allowed to react with the corresponding coupling component, preferably in aqueous solution.

The dyes of formula **(I)** can be isolated from the reaction medium by conventional processes, for example by salting out with an alkali metal salt, filtering and drying, if appropriate under reduced pressure and at elevated temperature.

Depending on the reaction and/or isolation conditions, the dyes of formula **(I)** can be obtained as free acid, as salt or as mixed salt which contains, for example, one or more cations selected from alkali metal ions, for example the sodium ion, or an ammonium ion or alkylammonium cation, for example mono-, di- or trimethyl- or - ethylammonium cations. The dye can be converted by conventional techniques from the free acid into a salt or into a mixed salt, or vice versa, or from one salt form into another. If desired, the dyes can be further purified by diafiltration, in which case undesired salts and synthesis by-products are separated off from the crude anionic dye.

The removal of undesired salts and synthesis by-products and partial removal of water from the crude dye solution can be carried out by means of a semipermeable membrane by applying a pressure, whereby the dye is obtained without the undesired salts and synthesis by-products as a solution, and, if necessary, as a solid body in a conventional manner.

The dyes of formula **(I)** and their salts are particularly suitable for dyeing or printing fibrous material consisting of natural or synthetic polyamide in violet to black shades. The dyes of formula **(I)** and their salts are suitable for producing ink-jet printing inks and for using these ink-jet printing inks to print fibrous material which consists of natural or synthetic polyamide or cellulose (paper for example).

The invention accordingly provides from another aspect for the use of the dyes of formula (I), their salts and mixtures for dyeing and/or printing fibrous materials containing or consisting of natural or synthetic polyamides. A further aspect is the production of ink-jet printing inks and their use for printing fibrous materials containing or consisting of natural or synthetic polyamides.

Dyeing is carried out as per known processes. Preference is given to dyeing in the exhaust process at a temperature of 30 to 140 °C, more preferably 80 to 120 °C, and most preferably at a temperature of 80 to 100 °C, and at a liquor ratio in the range from 3:1 to 40:1.

The substrate to be dyed can be present in the form of yarn, woven fabric, loop-forming knitted fabric or carpet, for example. Fully fashioned dyeings are even perfectly possible on delicate substrates, examples being lamb-wool, cashmere, alpaca and mohair. The dyes of the invention are particularly useful for dyeing fine-denier fibres (microfibres).

The dyes according to the present invention and their salts are highly compatible with known acid dyes. Accordingly, the dyes of formula (I), their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dye bath onto the substrate. The dyes of the present invention can be used in particular together with certain other dyes having suitable chromophores. The ratio in which the dyes are present in a combination shade dyeing or printing composition is dictated by the hue to be obtained.

The novel dyes of formula (I), as stated above, are very useful for dyeing natural and synthetic polyamides, i.e. wool, silk and all nylon types, on each of which dyeings having a high fastness level, especially good light fastness and good wet fastness (washing, alkaline perspiration) are obtained. The dyes of formula **(I)** and their salts have a high rate of exhaustion. The ability of the dyes of formula **(I)** and their salt to build up is likewise very good. On-tone dyeings on the identified substrates are of outstanding quality. All dyeings moreover have a constant hue under artificial light. Furthermore, the fastness to decating and boiling is good.

One decisive advantage of the novel dyes is that they are metal free and provide very homogeneous dyeings.

The compounds according to the invention can be used as an individual dye or, owing to their good compatibility, else as a combination element with other dyes of the same class having comparable dyeing properties, for example with regard to general fastness, exhaustion value, etc. The obtained combination dyeings have similar fastness compared to dyeings with the individual dye.

The dyes of formula **(I)** according to the invention can also be used as blue components in trichromatic dyeing or printing. Trichromatic dyeing or printing can utilize all customary and known dyeing and printing processes, such as, for example, the continuous process, exhaustion process, foam dyeing process and ink-jet process.

The composition of the individual dye components in the trichromatic dye mixture used in the process of the invention depends on the desired hue. A brown hue, for example, preferably utilizes 20 - 40% by weight of a yellow component, 40 - 60% by weight of an orange or red component and 10 - 20% by weight of the blue component according to the invention.

The blue component can, as described above, consist of a single component or of a mixture of different blue individual components conforming to formula (I). Preference is given to double and triple combinations.

Thus, the invention further relates to a dye composition, comprising at least one compound of formula (I), preferably wherein the compound is a blue dye.

In one embodiment, the composition further comprises a yellow and a red dye.

In the following examples, parts and percentages are by weight and temperatures are reported in degrees Celsius.

### EXAMPLES

### Preparation Example 1

34.6 parts of 1-aminobenzene-3-sulfonic acid were introduced into a mixture of 100 parts of ice and 25 parts by volume of approximately 30% strength aqueous hydrochloric acid and stirred for a period of about 30 minutes. At 0 to 5 °C, then, 35 parts by volume of a 40% strength sodium nitrite solution were added in a dropwise manner within a period of 30 minutes. The temperature was maintained at 0 to 5 °C during the addition by addition of ice. After the diazotization had ended, excess sodium nitrite was destroyed with amidosulfonic acid.

24.6 parts of p-xylidene were suspended in 300 parts of water. The suspension was adjusted to a p_{H} of 9-9.5 with sodium carbonate. The diazo suspension was then added in the course of a period of 30 minutes with vigorous stirring. During the addition, the p_{H} was maintained at about 9 by metered addition of sodium carbonate solution.

After the coupling reaction had ended, 50 parts by volume of approximately 30% strength aqueous hydrochloric acid were added and stirred in for a period of about 30 minutes. The resulting compound of the formula (VIII) 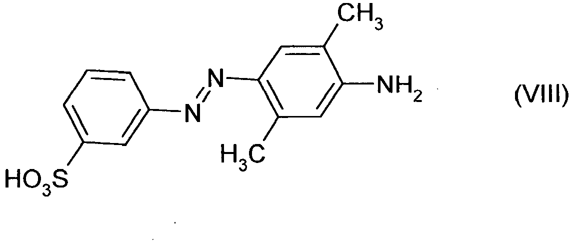 was salted out with sodium chloride, filtered off and dried at 50 °C under reduced pressure.

A suspension of 44.7 parts of 1-aminonaphthalene-6-sulfonic acid in 250 parts of water was admixed with a diazonium salt solution prepared in a conventional manner from 44.7 parts of the amino azo compound (VIII) and 56.5 parts by volume of 40% sodium nitrite solution at 0 to 5 °C. After coupling had ended, the resulting amino dye of the formula (IX) 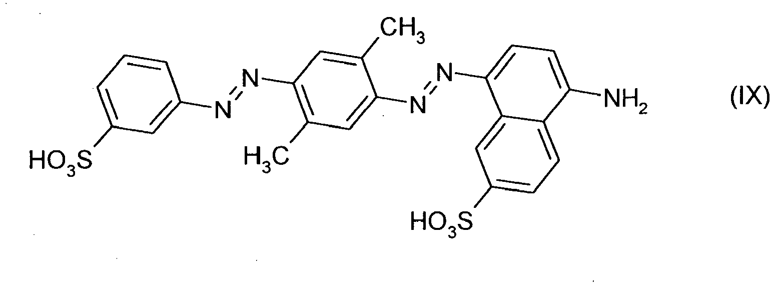 was left in suspension and diazotized again as described above. The diazonium salt solution thus obtained was added within a period of 30 minutes to a solution of 59.0 parts of 3-N-ethyl-N-benzylamino-1-methylbenzene in 150 parts by volume of water with stirring. During the addition, the p_{H} was maintained between 4 and 4.5 by metered addition of sodium carbonate solution. After the coupling reaction has ended, the p_{H} is adjusted to about 7.5 and the resulting dye of the following formula 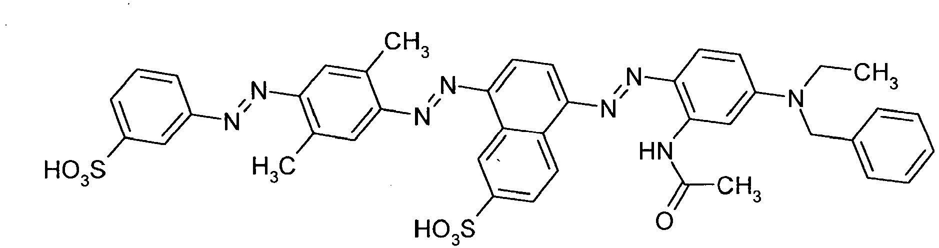 is salted out with sodium chloride, filtered off and dried at 50 °C at reduced pressure. On wool and especially on polyamide fibers it produces blue dyeings having good light and wet fastness properties (lambda(max) (λₘₐₓ) = 596 nm).

### Preparation Examples 2 to 100

The following table contains dyes of the general formula **(I)** prepared similarly to the method described in Preparation Example 1 by using the corresponding starting materials. These dyes provide blue dyeings on polyamide fibers and wool with very good light and wet fastness.

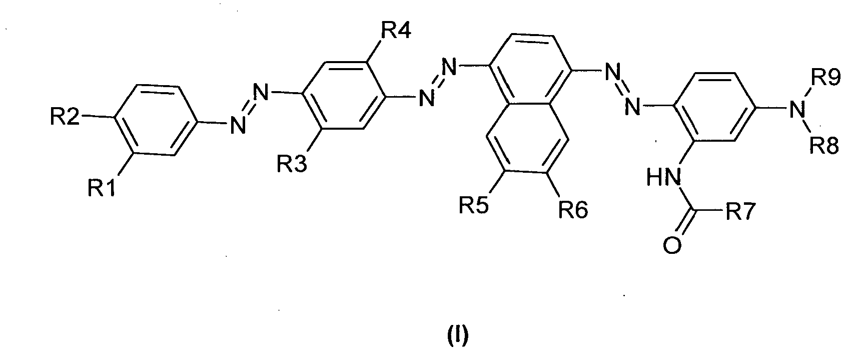

**Table**

| **Example** | **R₁** | **R₂** | **R₃** | **R₄** | **R₅** | **R₆** | **R₇** | **R₈** | **R₉** | **λₘₐₓ** |
|---|---|---|---|---|---|---|---|---|---|---|
| 2 | -SO₃H | H | Me | Me | H | -SO₃H | Me | 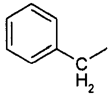 | Et | 596 |
| 3 | H | -SO₃H | Me | Me | H | -SO₃H | Me | 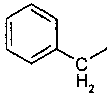 | Et | 588 |
| 4 | H | -SO₃H | Me | Me | -SO₃H | H | Me | 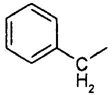 | Et | 594 |
| 5 | H | -SO₂CH₂CH₂OH | Me | Me | H | -SO₃H | Me | 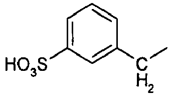 | Et | 594 |
| 6 | H | -SO₂CH₂CH₂OH | Me | Me | -SO₃H | H | Me | 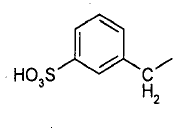 | Et | 595 |
| 7 | -SO₂CH₂CH₂OH | H | Me | Me | H | -SO₃H | Me | 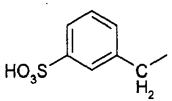 | Et | 597 |
| 8 | -SO₂CH₂CH₂OH | H | Me | Me | -SO₃H | H | Et | 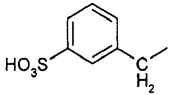 | Et | 595 |
| 9 | -SO₃H | H | Me | Me | H | H | Et | 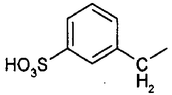 | Et | 594 |
| 10 | -SO₃H | H | Me | Me | H | H | Et | 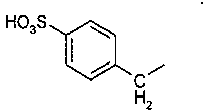 | Et | 589 |
| 11 | H | -SO₃H | Me | Me | H | H | NH₂ | 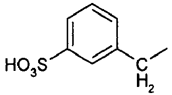 | Et | 588 |
| 12 | H | -SO₃H | Me | Me | H | H | NH₂ | 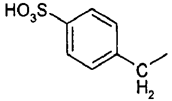 | Et | 597 |
| 13 | -SO₃H | H | Me | Me | H | H | NH₂ | 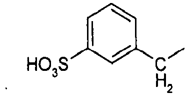 | Et | 596 |
| 14 | -SO₃H | H | Me | Me | H | -SO₃H | Me | 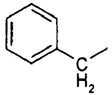 | Me | 591 |
| 15 | -SO₃H | H | Me | Me | -SO₃H | H | Me | 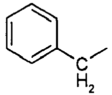 | Me | 598 |
| 16 | H | -SO₃H | H | H | H | -SO₃H | Me | 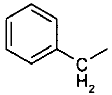 | Et | 596 |
| 17 | H | -SO₃H | H | H | -SO₃H | H | Me | 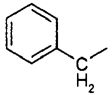 | Et | 589 |
| 18 | -SO₂CH₂CH₂OH | -NH₂CH₂CH₂OH | Me | Me | -SO₃H | H | Me | 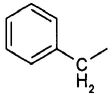 | Et | 588 |
| 19 | -SO₂CH₂CH₂OH | -NH₂CH₂CH₂OH | Me | Me | -SO₃H | H | NH₂ | 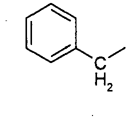 | Et | 588 |
| 20 | -SO₂CH₂CH₂OH | -NH₂CH₂CH₂OH | Me | Me | H | -SO₃H | Me | 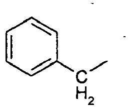 | Et | 594 |
| 21 | -SO₂CH₂CH₂OH | -NH₂CH₂CH₂OH | Me | Me | H | -SO₃H | NH₂ | 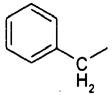 | Et | 596 |
| 22 | -SO₂CH₂CH₂OH | -NH₂CH₂CH₂OH | Me | Me | -SO₃H | H | Me | 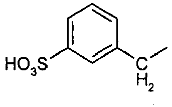 | Et | 587 |
| 23 | -SO₂CH₂CH₂OH | -NH₂CH₂CH₂OH | Me | Me | -SO₃H | H | NH₂ | 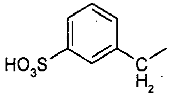 | Et | 589 |
| 24 | -SO₂CH₂CH₂OH | -NH₂CH₂CH₂OH | Me | Me | H | -SO₃H | Me | 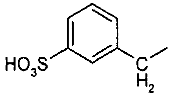 | Et | 589 |
| 25 | -SO₂CH₂CH₂OH | -NH₂CH₂CH₂OH | Me | Me | H | -SO₃H | NH₂ | 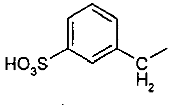 | Et | 587 |
| 26 | -SO₂CH₂CH₂OH | -NH₂CH₂CH₂OH | Me | Me | -SO₃H | H | Me | 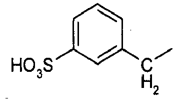 | Me | 591 |
| 27 | -SO₂CH₂CH₂OH | -NH₂CH₂CH₂OH | Me | Me | -SO₃H | H | NH₂ | 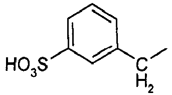 | Me | 591 |
| 28 | -SO₂CH₂CH₂OH | -NH₂CH₂CH₂OH | Me | Me | H | -SO₃H | Me | 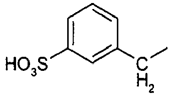 | Me | 592 |
| 29 | -SO₂CH₂CH₂OH | -NH₂CH₂CH₂OH | Me | -OMe | -SO₃H | H | Me | 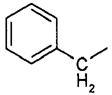 | Et | 599 |
| 30 | -SO₂CH₂CH₂OH | -NH₂CH₂CH₂OH | Me | -OMe | -SO₃H | H | Et | 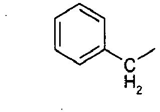 | Et | 598 |
| 31 | -SO₂CH₂CH₂OH | -NH₂CH₂CH₂OH | Me | -OMe | H | -SO₃H | Me | 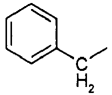 | Et | 598 |
| 32 | -SO₂CH₂CH₂OH | -NH₂CH₂CH₂OH | Me | -OMe | H | -SO₃H | NH₂ | 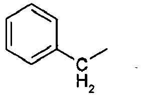 | Et | 597 |
| 33 | -SO₂CH₂CH₂OH | -NH₂CH₂CH₂OH | Me | -OMe | -SO₃H | H | Me | 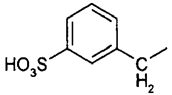 | Et | 594 |
| 34 | -SO₂CH₂CH₂OH | -NH₂CH₂CH₂OH | Me | -OMe | -SO₃H | H | NH₂ | 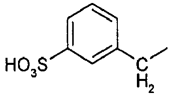 | Et | 592 |
| 35 | -SO₂CH₂CH₂OH | -NH₂CH₂CH₂OH | Me | -OMe | H | -SO₃H | Me | 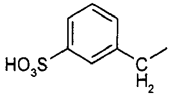 | Et | 589 |
| 36 | -SO₂CH₂CH₂OH | -NH₂CH₂CH₂OH | Me | -OMe | H | -SO₃H | NH₂ | 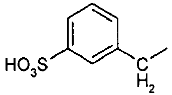 | Et | 591 |
| 37 | -SO₂CH₂CH₂OH | -NH₂CH₂CH₂OH | -OMe | -OMe | -SO₃H | H | Me | 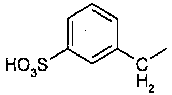 | Et | 591 |
| 38 | -SO₂CH₂CH₂OH | -NH₂CH₂CH₂OH | -OMe | -OMe | -SO₃H | H | NH₂ | 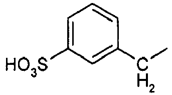 | Et | 589 |
| 39 | -SO₂CH₂CH₂OH | -NH₂CH₂CH₂OH | -OMe | -OMe | H | -SO₃H | Me | 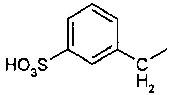 | Et | 591 |
| 40 | -SO₂CH₂CH₂OH | -NH₂CH₂CH₂OH | -OMe | -OMe | H | -SO₃H | NH₂ | 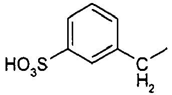 | Et | 588 |
| 41 | -SO₂CH₂CH₂OH | -NH₂CH₂CH₂OH | -OMe | -OMe | -SO₃H | H | Me | 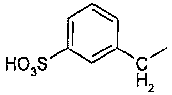 | Me | 596 |
| 42 | -SO₂CH₂CH₂OH | -NH₂CH₂CH₂OH | -OMe | -OMe | H | -SO₃H | Me | 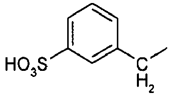 | Me | 592 |
| 43 | -SO₃H | H | Me | -OMe | H | -SO₃H | Me | 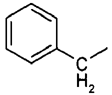 | Et | 588 |
| 44 | -SO₃H | H | Me | -OMe | -SO₃H | H | Me | 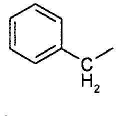 | Et | 590 |
| 45 | H | -SO₃H | Me | -OMe | H | -SO₃H | Me | 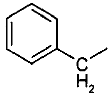 | Et | 590 |
| 46 | H | -SO₃H | Me | -OMe | -SO₃H | H | Me | 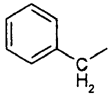 | Et | 588 |
| 47 | -SO₃H | H | -OMe | -OMe | H | -SO₃H | Me | 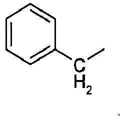 | Et | 591 |
| 48 | -SO₃H | H | -OMe | -OMe | -SO₃H | H | Me | 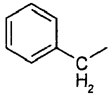 | Et | 589 |
| 49 | H | -SO₃H | -OMe | -OMe | H | -SO₃H | Me | 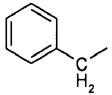 | Et | 592 |
| 50 | H | -SO₃H | -OMe | -OMe | -SO₃H | H | Me | 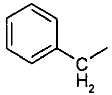 | Et | 596 |
| 51 | H | -SO₃H | Me | -OMe | H | H | Me | 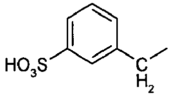 | Et | 590 |
| 52 | H | -SO₃H | -OMe | -OMe | H | H | Me | 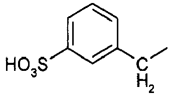 | Et | 588 |
| 53 | -SO₃H | H | Me | Me | H | -SO₃H | Me | 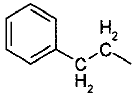 | Et | 586 |
| 54 | H | -SO₃H | Me | Me | H | -SO₃H | Me | 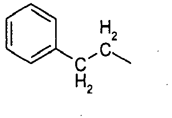 | Et | 589 |
| 55 | H | -SO₃H | Me | Me | -SO₃H | H | Me | 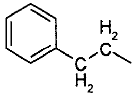 | Et | 588 |
| 56 | -SO₃H | H | Me | Me | H | -SO₃H | Me | 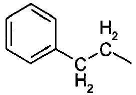 | Et | 595 |
| 57 | -SO₃H | H | Me | Me | H | -SO₃H | NH₂ | 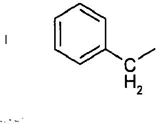 | Et | 594 |
| 58 | H | -SO₃H | Me | Me | H | -SO₃H | NH₂ | 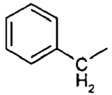 | Et | 589 |
| 59 | H | -SO₃H | Me | Me | -SO₃H | H | NH₂ | 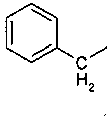 | Et | 592 |
| 60 | -SO₃H | H | Me | Me | -SO₃H | H | NH₂ | 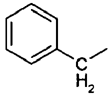 | Et | 596 |
| 61 | -SO₃H | H | Me | Me | H | -SO₃H | Me | Et | Et | 596 |
| 62 | H | -SO₃H | Me | Me | H | -SO₃H | Me | Et | Et | 588 |
| 63 | H | -SO₃H | Me | Me | -SO₃H | H | Me | -CH₂CH₂CN | Et | 594 |
| 64 | -SO₃H | H | Me | Me | H | -SO₃H | Me | -CH₂CH₂CN | CH₂CH₂ CN | 598 |
| 65 | -SO₃H | H | Me | Me | H | -SO₃H | Me | -CH₂CH₂CN | - | 597 |
| | | | | | | | | | CH₂CH₂ OH | |
| 66 | -SO₃H | H | Me | Me | H | -SO₃H | Me | -CH₂CH₂OH | CH₂CH₂ OH | 592 |
| 67 | H | -SO₃H | Me | Me | H | -SO₃H | Me | -CH₂CH₂CN | CH₂CH₂ OH | 597 |
| 68 | -SO₃H | H | Me | Me | H | -SO₃H | NH₂ | -CH₂CH₂CN | CH₂CH₂ OH | 592 |
| 69 | H | -SO₃H | Me | Me | H | -SO₃H | NH₂ | -CH₂CH₂OH | CH₂CH₂ OH | 596 |
| 70 | -SO₃H | H | Me | Me | H | -SO₃H | Et | 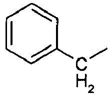 | 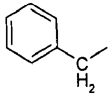 | 593 |
| 71 | H | -SO₃H | Me | Me | H | -SO₃H | Me | 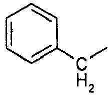 | 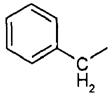 | 587 |
| 72 | -SO₃H | H | Me | Me | H | -SO₃H | n-Bu | 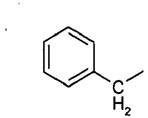 | 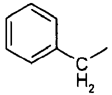 | 592 |
| 73 | H | -SO₃H | Me | Me | H | -SO₃H | Ph | 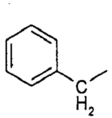 | 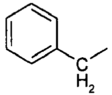 | 593 |
| 74 | H | -SO₂CH₂CH₂OH | Me | Me | H | -SO₃H | Ph | 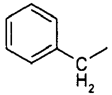 | 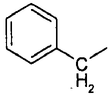 | 592 |
| 75 | H | -SO₂CH₂CH₂OH | Me | Me | -SO₃H | H | Me | 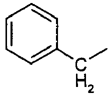 | 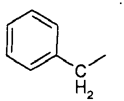 | 590 |
| 76 | -SO₂CH₂CH₂OH | H | Me | Me | H | -SO₃H | Me | 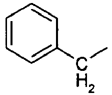 | 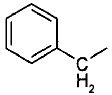 | 593 |
| 77 | -SO₂CH₂CH₂OH | H | Me | Me | -SO₃H | H | Me | 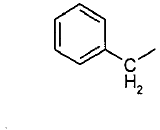 | 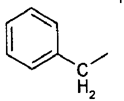 | 589 |
| 78 | -SO₃H | H | Me | Me | H | -SO₃H | i-Pr | -C₄H₉ | -C₄H₉ | 589 |
| 79 | H | -SO₃H | Me | Me | H | -SO₃H | NH₂ | -C₄H₉ | -C₄H₉ | 589 |
| 80 | H | -SO₂CH₂CH₂OH | Me | Me | H | -SO₃H | Me | -C₄H₉ | -C₄H₉ | 590 |
| 81 | H | -SO₂CH₂CH₂OH | Me | Me | -SO₃H | H | Me | -C₄H₉ | -C₄H₉ | 588 |
| 82 | -SO₂CH₂CH₂OH | H | Me | Me | H | -SO₃H | Me | -C₄H₉ | -C₄H₉ | 589 |
| 83 | -SO₃H | H | Me | Me | H | H | Me | -C₆H₁₃ | -C₆H₁₃ | 590 |
| 84 | H | -SO₃H | Me | Me | H | H | Me | -C₆H₁₃ | -C₆H₁₃ | 586 |
| 85 | H | -SO₃H | Me | Me | H | H | Me | -C₆H₁₃ | -C₆H₁₃ | 597 |
| 86 | -SO₃H | H | Me | Me | H | H | NH₂ | -C₆H₁₃ | -C₆H₁₃ | 595 |
| 87 | -SO₃H | H | Me | Me | H | -SO₃H | Me | -C₆H₁₃ | -C₆H₁₃ | 590 |
| 88 | -SO₃H | H | Me | Me | -SO₃H | H | Me | -C₆H₁₃ | -C₆H₁₃ | 597 |
| 89 | H | -SO₃H | H | H | H | -SO₃H | Me | 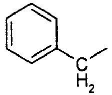 | -C₆H₁₃ | 595 |
| 90 | H | -SO₃H | H | H | -SO₃H | H | Me | 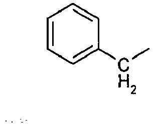 | -C₆H₁₃ | 586 |
| 91 | -SO₂CH₂CH₂OH | -NH₂CH₂CH₂OH | Me | Me | -SO₃H | H | Me | 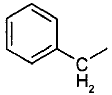 | -C₆H₁₃ | 590 |
| 92 | -SO₂CH₂CH₂OH | -NH₂CH₂CH₂OH | Me | Me | -SO₃H | H | n-Bu | 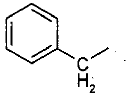 | -C₆H₁₃ | 593 |
| 93 | -SO₂CH₂CH₂OH | -NH₂CH₂CH₂OH | Me | Me | H | -SO₃H | Me | 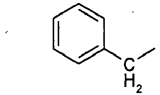 | -C₄H₉ | 594 |
| 94 | -SO₂CH₂CH₂OH | -NH₂CH₂CH₂OH | Me | Me | H | -SO₃H | n-Pr | 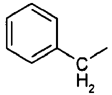 | -C₄H₉ | 593 |
| 95 | -SO₂CH₂CH₂OH | -NH₂CH₂CH₂OH | Me | Me | -SO₃H | H ' | Me | 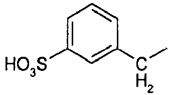 | -C₄H₉ | 588 |
| 96 | -SO₂CH₂CH₂OH | -NH₂CH₂CH₂OH | Me | Me | -SO₃H | H | NH₂ | 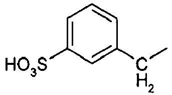 | -C₄H₉ | 586 |
| 97 | -SO₂CH₂CH₂OH | -NH₂CH₂CH₂OH | Me | Me | H | -SO₃H | Me | 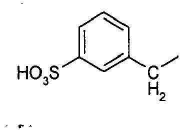 | -C₄H₉ | 589 |
| 98 | -SO₂CH₂CH₂OH | -NH₂CH₂CH₂OH | Me | Me | H | -SO₃H | NH₂ | 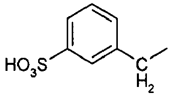 | -C₄H₉ | 588 |
| 99 | H | -SO₃H | H | H | H | -SO₃H | NH₂ | 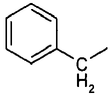 | -C₆H₁₃ | 595 |
| 100 | H | -SO₃H | H | H | -SO₃H | H | NH₂ | 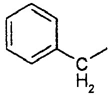 | -C₆H₁₃ | 596 |

### Application Example A

A dye bath at 40 °C, consisting of 2,000 parts of water, 1 part of a weakly cation-active levelling agent which is based on an ethoxylated aminopropyl fatty acid amide and which has affinity for dye, 0.25 part of the dye of Preparation Example 1 and adjusted to a p_{H} of 5 with 1-2 parts of 40% aqueous acetic acid is entered with 100 parts of nylon-6 fabric. After 10 minutes at 40 °C, the dye bath is heated to 98 °C at a rate of 1 °C per minute and then left at the boil for 45-60 minutes. Thereafter it is cooled down to 70 °C over a period of 15 minutes. The dyeing is removed from the bath, rinsed with hot and then with cold water and dried. The result obtained is a blue polyamide dyeing possessing good light and wet fastness.

### Application Example B

A dye bath at 40 °C, consisting of 2,000 parts of water, 1 part of a weakly cation-active levelling agent which is based on an ethoxylated aminopropyl fatty acid amide and which has affinity for dye, 0.3 part of the dye of Preparation Example 1 and adjusted to a p_{H} of 5.5 with 1-2 parts of 40% acetic acid is entered with 100 parts of nylon-6,6 fabric. After 10 minutes at 40 °C, the dye bath is heated to 120 °C at a rate of 1.5 °C per minute and then left at this temperature for 15-25 minutes. Thereafter it is cooled down to 70 °C over a period of 25 minutes. The dyeing is removed from the dye bath, rinsed with hot and then with cold water and dried. The result obtained is a blue polyamide dyeing with good levelness and having good light fastness and wet fastness.

### Application Example C

A dye bath at 40 °C, consisting of 4,000 parts of water, 1 part of a weakly amphoteric levelling agent which is based on a sulfated, ethoxylated fatty acid amide and which has affinity for dye, 0.4 part of the dye of Preparation Example 1 and adjusted to p_{H} 5 with 1-2 parts of 40% acetic acid is entered with 100 parts of wool fabric. After 10 minutes at 40 °C, the dye bath is heated to boiling at a rate of 1 °C per minute and then left at the boil for 40-60 minutes. Thereafter it is cooled down to 70 °C over a period of 20 minutes. The dyeing is removed from the bath, rinsed with hot and then with cold water and dried. The result obtained is a blue wool dyeing possessing good light fastness and wet fastness.

### Application Example D

100 parts of a woven nylon-6 material are padded with a 50 °C liquor consisting of
40 parts of the dye of Preparation Example 1,
100 parts of urea,
20 parts of a nonionic solubilizer based on butyldiglycol,
15-20 parts of acetic acid (to adjust the p_{H} to 4),
10 parts of a weakly cation-active levelling agent which is based on an
ethoxylated aminopropyl fatty acid amide and has affinity for dye, and
810-815 parts of water (to make up to 1,000 parts of padding liquor).

The material thus impregnated is rolled up and left to dwell in a steaming chamber under saturated steam conditions at 85-98 °C for a period of 3-6 hours for fixation. The dyeing is then rinsed with hot and cold water and dried. The result obtained is a blue nylon dyeing having good levelness in the piece and good light fastness and wet fastness.

### Application Example E

A textile cut pile sheet material composed of nylon-6 and having a synthetic base fabric is padded with a liquor containing per 1,000 parts
1 part of dye of Preparation Example 1
4 parts of a commercially available thickener based on carob flour ether
2 parts of a nonionic ethylene oxide adduct of a higher alkylphenol
1 part of 60% acetic acid.

This is followed by printing with a paste which contains the following components per 1,000 parts:

| | |
|---|---|
| 20 | parts of commercially available alkoxylated fatty alkylamine |
| 20 | parts of a commercially available thickener based on carob flour ether. |

The print is fixed for a period of 6 minutes in saturated steam at 100 °C, rinsed and dried.

The result obtained is a level-colored cover material having a blue and white pattern.

### Application Example F

A dye bath at 40 °C consisting of 2,000 parts of water, 1 part of a weakly cation-active levelling agent which is based on an ethoxylated aminopropyl fatty acid amide and has affinity for dye, 0.2 part of the red dye of Example 8 of WO2002/46318, 1.5 parts of a commercially available preparation of C.I. Acid Yellow 236 (Nylosan Yellow F-L) and 0.5 part of the blue dye of Preparation Example 1 which is adjusted to p_{H} 5 with 1-2 parts of 40% acetic acid is entered with 100 parts of woven nylon-6,6 fabric. After a period of 10 minutes at 40 °C, the dye bath is heated to 98 °C at a rate of 1 °C per minute and then left at the boil for 45 to 60 minutes. This is followed by cooling down to 70 °C over a period of 15 minutes. The dyeing is removed from the bath, rinsed with hot and then with cold water and dried. The result obtained is a level gray polyamide dyeing having good light fastness and wet fastness.

Application examples A to F were also carried out with dyes according to Preparation Examples 2 to 100 with equally good results.

### Application example G

3 parts of the dye according to Preparation Example 3 are dissolved in 82 parts of demineralized water and 15 parts of diethylene glycol at 60 °C. Cooling down to room temperature gives a blue printing ink which is very highly suitable for ink jet printing on paper or polyamide and wool textiles.

Application Example G was also carried out with dyes according to preparation examples 1, 2 and 4 to 100 with equally good results.

### Application Example H

A dye bath consisting of 1,000 parts of water, 80 parts of calcined Glauber salt, 1 part of sodium nitrobenzene-3-sulfonate and 1 part of dye from Preparation Example 1 is heated to 80 °C in the course of 10 minutes. Then, 100 parts of mercerized cotton are added. This is followed by dyeing at 80 °C for a period of 5 minutes and then heating to 95 °C in the course of 15 minutes. After a period of 10 minutes at 95 °C, 3 parts of sodium carbonate are added, followed by a further 7 parts of sodium carbonate after a period of 20 minutes and another 10 parts of sodium carbonate after a period of 30 minutes at 95 °C. Dyeing is subsequently continued at 95 °C for a period of 60 minutes. The dyed material is then removed from the dye bath and rinsed in running demineralized water for 3 minutes. This is followed by two washes for a period of 10 minutes in 5,000 parts of boiling demineralized water at a time and subsequent rinsing in running demineralized water at 60 °C for a period of 3 minutes and with cold tap water for a period of one minute. Drying leaves a brilliant blue cotton dyeing having good wet fastness.

### Application Example J

0.2 parts of the dye of Preparation Example 1 are dissolved in 100 parts of hot water and the solution is cooled down to room temperature. This solution is added to 100 parts of chemically bleached sulfite pulp beaten in 2,000 parts of water in a hollander. After a period of 15 minutes of commixing the stuff is sized with resin size and aluminum sulfate in a conventional manner. Paper produced from this stuff has a blue shade with good wet fastness.

Application Examples H and J were also carried out with dyes according to Preparation Examples 2 to 100 with equally good results.

## Claims

1. Compound of formula **(I)** 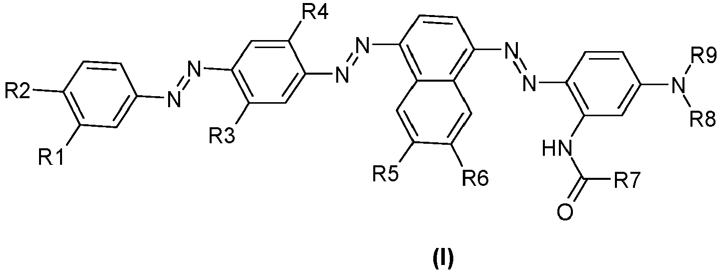 wherein
R' signifies hydrogen, unbranched C₁-C₆-alkyl or branched C₃-C₆-alkyl, or SO₃Y, or SO₂CH₂CH₂OH,
R² signifies hydrogen, unbranched C₁-C₆-alkyl or branched C₃-C₆-alkyl, or SO₃Y, or SO₂CH₂CH₂OH, or -NHCH₂CH₂OH,
R³ and R⁴ signify independently from each other hydrogen, unbranched C₁-C₆-alkyl or branched C₃-C₆-alkyl, unbranched C₁-C₆-alkoxy or branched C₃-C₆-alkoxy,
R⁵ signifies hydrogen or SO₃Y,
R⁶ signifies hydrogen or SO₃Y,
R⁷ signifies hydrogen, unbranched C₁-C₆-alkyl or branched C₃-C₆-alkyl, phenyl, or unbranched C₁-C₁₂-alkoxy, or branched C₃-C₁₂-alkoxy, or NH₂,
R⁸ and R⁹ signify independently from each other unbranched C₁-C₆-alkyl or branched C₃-C₆-alkyl, or aryl, or -(CH₂)ₙ-aryl with n = 1, 2, 3 or 4;
wherein Y signifies H⁺ or an alkali metal cation, preferably Na⁺ or K⁺; and
wherein said compound of formula **(I)** contains at least one SO₃Y group.

2. Compound as claimed in claim 1, wherein the compound of formula **(I)** contains two, or three SO₃Y groups, more preferably two SOsY-groups.

3. Compound as claimed in at least one of the preceding claims 1 or 2, wherein R' signifies hydrogen or SO₃Y, or SO₂CH₂CH₂OH and/ or
wherein R² signifies hydrogen, SO₃Y, or-NHCH₂CH₂OH.

4. Compound as claimed in at least one of the preceding claims 1 to 3, wherein R³ and R⁴ signify independently of each other hydrogen, or unbranched C₁-C₄-alkyl, or branched C₃-C₄-alkyl.

5. Compound as claimed in at least one of the preceding claims 1 to 4, wherein R⁷ signifies hydrogen, or NH₂, or unbranched C₁-C₄-alkyl, or branched C₃-C₄-alkyl, preferably methyl or ethyl.

6. Compound as claimed in at least one of the preceding claims 1 to 5, wherein R⁸ signifies-(CH₂)ₙ-phenyl, wherein n = 1, 2, 3 or 4; or-(CH₂)ₙ-naphthyl, wherein n = 1, 2, 3 or 4.

7. Compound as claimed in at least one of the preceding claims 1 to 6, wherein R⁸ signifies a -(CH₂)₁₋₂-phenyl group, or a -(CH₂)₁₋₂-phenyl group wherein the phenyl radical is substituted with one SO₃Y or with one nitro group and/ or
wherein R⁹ signifies unbranched C₁-C₄-alkyl, or branched C₃-C₄-alkyl.

8. Compound as claimed in at least one of the preceding claims 1 to 7, wherein
R¹ signifies hydrogen or SO₃Y or SO₂CH₂CH₂OH;
R² signifies hydrogen, SO₃Y, or SO₂CH₂CH₂OH or -NHCH₂CH₂OH;
R³ and R⁴ signify independently of each other hydrogen, methyl or methoxy;
R⁵ signifies hydrogen or SO₃Y;
R⁶ signifies hydrogen or SO₃Y;
R⁷ signifies hydrogen or methyl;
R⁸ signifies -(CH₂)ₙ-phenyl or -(CH₂)ₙ-phenyl substituted with SO₃Y, wherein n = 1, 2;
R⁹ signifies methyl or ethyl;
with the proviso that R⁵ and R⁶ do not both signify SO₃Y at the same time.

9. A process for preparing a compound as claimed in at least one of the preceding claims 1 to 8, wherein the process comprises a compound of formula **(II)** 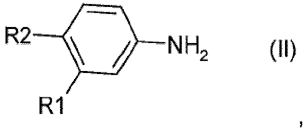 being diazotized and coupled onto one equivalent of a compound of formula (III), 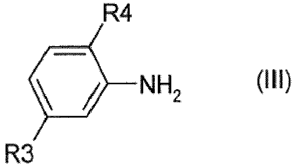 the resulting amine of formula **(IV)** 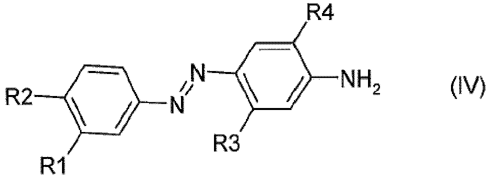 being diazotized and coupled onto one equivalent of a compound of formula **(V)** 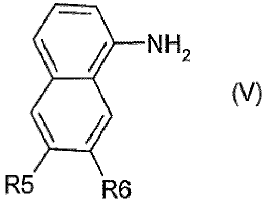 and the resulting amine of formula **(VI)** 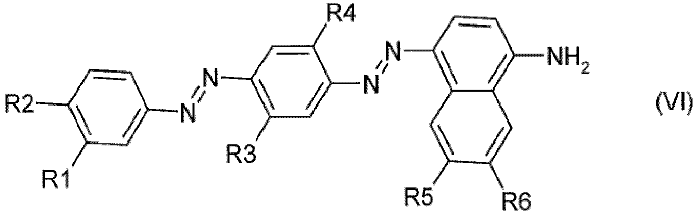 being diazotized and coupled onto one equivalent of a compound of formula **(VII)** 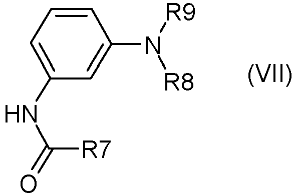 wherein the R¹ to R⁹ radicals are each as defined in at least one of the preceding claims 1 to 8.

10. Use of a compound as claimed in at least one of the preceding claims 1 to 8 in a dyeing process or a printing process, preferably a process for dyeing or printing a substrate, in particular a fibrous substrate, preferably of fibrous material comprising or consisting of at least one natural polyamide, preferably selected from wool or silk, or at least one synthetic polyamide, preferably selected from nylon or mixtures thereof.

11. Use as claimed in claim 10, wherein a compound as claimed in at least one of the preceding claims 1 to 8 is used as blue component in a trichromatic dyeing or trichromatic printing process.

12. Process for dyeing or printing a substrate, wherein the process is a trichromatic dyeing or trichromatic printing process for the manufacturing of a color-containing substrate, wherein the blue component used in the trichromatic dyeing or trichromatic printing process is a compound as claimed in at least one of the preceding claims 1 to 8.

13. Colour-containing substrate prepared according to the process as claimed in claim 12.

14. Dye composition, comprising at least one compound as defined in any one of claims 1 to 8.

15. Dye composition as claimed in claim 14, further comprising a yellow and a red dye.

## Patentansprüche

1. Verbindung der Formel **(I)** 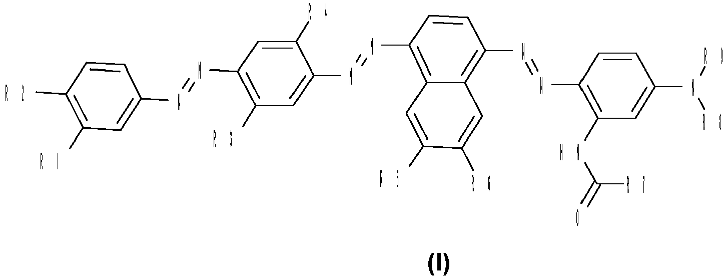 wobei
R¹ Wasserstoff, unverzweigtes C₁-C₆-Alkyl oder verzweigtes C₃-C₆-Alkyl, oder SO₃Y, oder SO₂CH₂CH₂OH bedeutet,
R² Wasserstoff, unverzweigtes C₁-C₆-Alkyl oder verzweigtes C₃-C₆-Alkyl, oder SO₃Y, oder SO₂CH₂CH₂OH, oder -NHCH₂CH₂OH bedeutet,
R³ und R⁴ unabhängig voneinander Wasserstoff, unverzweigtes C₁-C₆-Alkyl oder verzweigtes C₃-C₆-Alkyl, unverzweigtes C₁-C₆-Alkoxy oder verzweigtes C₃-C₆-Alkoxy bedeuten,
R⁵ Wasserstoff oder SO₃Y bedeutet,
R⁶ Wasserstoff oder SO₃Y bedeutet,
R⁷ Wasserstoff, unverzweigtes C₁-C₆-Alkyl oder verzweigtes C₃-C₆-Alkyl, Phenyl, oder unverzweigtes C₁-C₁₂-Alkoxy, oder verzweigtes C₃-C₁₂-Alkoxy, oder NH₂ bedeutet,
R⁸ und R⁹ unabhängig voneinander unverzweigtes C₁-C₆-Alkyl oder verzweigtes C₃-C₆-Alkyl, oder Aryl, oder -(CH₂)ₙ-Aryl mit n = 1, 2, 3 oder 4 bedeuten;
wobei Y H⁺ oder ein Alkalimetallkation, vorzugsweise Na⁺ oder K⁺ bedeutet; und
wobei besagte Verbindung der Formel **(I)** mindestens eine SO₃Y Gruppe enthält.

2. Verbindung wie beansprucht in Anspruch 1, wobei die Verbindung der Formel **(I)** zwei oder drei SO₃Y Gruppen enthält, vorzugsweise zwei SO₃Y Gruppen.

3. Verbindung wie beansprucht in mindestens einem der vorstehenden Ansprüche 1 oder 2, wobei R¹ Wasserstoff oder SO₃Y, oder SO₂CH₂CH₂OH und/oder
wobei R² Wasserstoff, SO₃Y, oder-NHCH₂CH₂OH bedeutet.

4. Verbindung wie beansprucht in mindestens einem der vorstehenden Ansprüche 1 bis 3, wobei R³ und R⁴ unabhängig voneinander Wasserstoff, oder unverzweigtes C₁-C₄-Alkyl, oder verzweigtes C₃-C₄-Alkyl bedeuten.

5. Verbindung wie beansprucht in mindestens einem der vorstehenden Ansprüche 1 bis 4, wobei R⁷ Wasserstoff, oder NH₂, oder unverzweigtes C₁-C₄-Alkyl, oder verzweigtes C₃-C₄-Alkyl, vorzugsweise Methyl oder Ethyl bedeutet.

6. Verbindung wie beansprucht in mindestens einem der vorstehenden Ansprüche 1 bis 5, wobei R⁸ -(CH₂)ₙ-Phenyl mit n = 1, 2, 3 oder 4, oder -(CH₂)ₙ-Naphthyl mit n = 1, 2, 3 oder 4 bedeutet.

7. Verbindung wie beansprucht in mindestens einem der vorstehenden Ansprüche 1 bis 6, wobei R⁸ eine -(CH₂)₁₋₂-Phenyl Gruppe, oder eine -(CH₂)₁₋₂-Phenyl Gruppe bei der der Phenylrest mit einer SO₃Y- oder mit einer Nitrogruppe substituiert ist, bedeutet, und/oder
wobei R⁹ unverzweigtes C₁-C₄-Alkyl oder verzweigtes C₃-C₄-Alkyl bedeutet.

8. Verbindung wie beansprucht in mindestens einem der vorstehenden Ansprüche 1 bis 7, wobei
R¹ Wasserstoff oder SO₃Y oder SO₂CH₂CH₂OH bedeutet;
R² Wasserstoff, SO₃Y, oder SO₂CH₂CH₂OH oder -NHCH₂CH₂OH bedeutet;
R³ und R⁴ unabhängig voneinander Wasserstoff, Methyl, oder Methoxy bedeuten;
R⁵ Wasserstoff oder SO₃Y bedeutet;
R⁶ Wasserstoff oder SO₃Y bedeutet;
R⁷ Wasserstoff oder Methyl bedeutet;
R⁸ -(CH₂)ₙ-Phenyl oder -(CH₂)ₙ-Phenyl substituiert mit SO₃Y, wobei n = 1, 2 bedeutet;
R⁹ Methyl oder Ethyl bedeutet;
mit dem Vorbehalt, dass R⁵ and R⁶ nicht beide gleichzeitig SO₃Y bedeuten.

9. Verfahren für die Herstellung einer Verbindung wie beansprucht in mindestens einem der vorstehenden Ansprüche 1 bis 8, wobei das Verfahren aufweist, eine Verbindung der Formel **(II)** zu diazotieren, 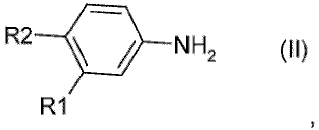 und mit einem Äquivalent einer Verbindung der Formel **(III)** zu kuppeln, 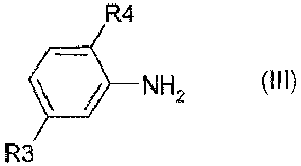 das entstehende Amin der Formel **(IV)** zu diazotieren, 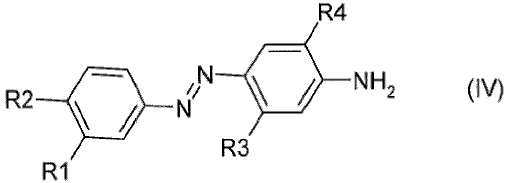 und mit einem Äquivalent einer Verbindung der Formel **(V)** zu kuppeln, 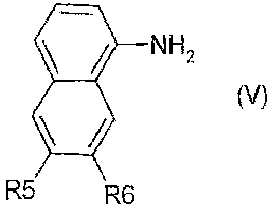 das entstehende Amin der Formel **(VI)** zu diazotieren, 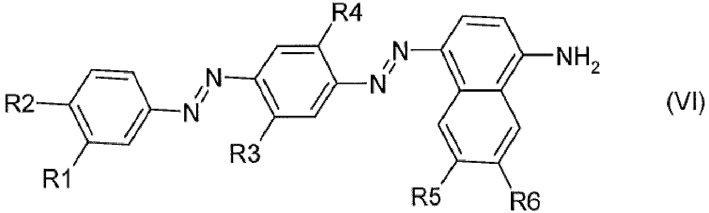 und mit einem Äquivalent einer Verbindung der Formel **(VII)** zu kuppeln, 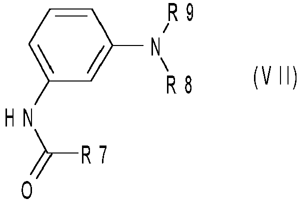 wobei die R¹ bis R⁹ Reste jeweils wie in mindestens einem der vorstehenden Ansprüche 1 bis 8 definiert sind.

10. Verwendung einer Verbindung wie beansprucht in mindestens einem der vorstehenden Ansprüche 1 bis 8 in einem Färbeprozess oder einem Druckprozess, vorzugsweise in einem Prozess der Färbung oder Bedruckung eines Subtrats, speziell eines faserigen Substrats, vorzugsweise eines faserigen Materials, aufweisend oder bestehend aus mindestens einem natürlichen Polyamid, vorzugsweise gewählt aus Wolle oder Seide, oder zumindest einem synthetischen Polyamid, vorzugsweise gewählt aus Nylon, oder Mischungen davon.

11. Verwendung wie beansprucht in Anspruch 10, wobei eine Verbindung wie beansprucht in mindestens einem der vorstehenden Ansprüche 1 bis 8 als blaue Komponente in einem trichromatischen Färbe- oder trichromatischen Druckprozess verwendet wird.

12. Verfahren zur Färbung oder Bedruckung eines Substrats, wobei das Verfahren ein trichromatischer Färbeprozess oder trichromatischer Druckprozess zur Herstellung eines farbigen Substrates ist, wobei die blaue Komponente in dem trichromatischen Färbeprozess oder trichromatischen Druckprozess eine Verbindung ist, die in mindestens einem der vorstehenden Ansprüche 1 bis 8 beansprucht ist.

13. Farben-enthaltendes Substrat, hergestellt nach dem Verfahren in Anspruch 12.

14. Farbstoffzusammenssetzung, aufweisend mindestens eine Verbindung wie definiert in einem der Ansprüche 1 bis 8.

15. Farbstoffzusammensetzung nach Anspruch 14, weiterhin aufweisend einen gelben und einen roten Farbstoff.

## Revendications

1. Composé de formule **(I)** 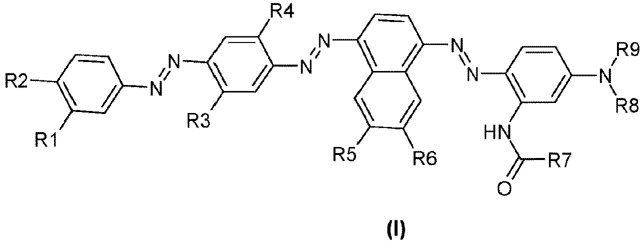 dans lequel
R¹ représente un hydrogène, un alkyle en C₁ à C₆ non ramifié ou un alkyle en C₃ à C₆ ramifié, ou SO₃Y, ou SO₂CH₂CH₂OH,
R² représente un hydrogène, un alkyle en C₁ à C₆ non ramifié ou un alkyle en C₃ à C₆ ramifié, ou SO₃Y, ou SO₂CH₂CH₂OH, ou -NHCH₂CH₂OH,
R³ et R⁴ représentent indépendamment l'un de l'autre un hydrogène, un alkyle en C₁ à C₆ non ramifié ou un alkyle en C₃ à C₆ ramifié, un alcoxy en C₁ à C₆ non ramifié ou un alcoxy en C₃ à C₆ ramifié,
R⁵ représente un hydrogène ou SO₃Y,
R⁶ représente un hydrogène ou SO₃Y,
R⁷ représente un hydrogène, un alkyle en C₁ à C₆ non ramifié ou un alkyle en C₃ à C₆ ramifié, un phényle, ou un alcoxy en C₁ à C₁₂ non ramifié, ou un alcoxy en C₃ à C₁₂ ramifié, ou NH₂,
R⁸ et R⁹ représentent indépendamment l'un de l'autre un alkyle en C₁ à C₆ non ramifié ou un alkyle en C₃ à C₆ ramifié, ou un aryle, ou -(CH₂)ₙ-aryle avec n = 1, 2, 3 ou 4 ;
dans lequel Y représente H⁺ ou un cation de métal alcalin, préférentiellement Na⁺ ou K⁺ ; et
dans lequel ledit composé de formule **(I)** contient au moins un groupe SO₃Y.

2. Composé tel que revendiqué dans la revendication 1, dans lequel le composé de formule **(I)** contient deux ou trois groupes SO₃Y, plus préférentiellement deux groupes SO₃Y.

3. Composé tel que revendiqué dans au moins l'une des revendications précédentes 1 ou 2,
dans lequel R¹ représente un hydrogène ou SO₃Y, ou SO₂CH₂CH₂OH et/ou
dans lequel R² représente un hydrogène, SO₃Y ou -NHCH₂CH₂OH.

4. Composé tel que revendiqué dans au moins l'une des revendications précédentes 1 à 3, dans lequel R³ et R⁴ représentent indépendamment l'un de l'autre un hydrogène ou un alkyle en C₁ à C₄ non ramifié ou un alkyle en C₃ à C₄ ramifié.

5. Composé tel que revendiqué dans au moins l'une des revendications précédentes 1 à 4, dans lequel R⁷ représente un hydrogène, ou NH₂, ou un alkyle en C₁ à C₄ non ramifié, ou un alkyle en C₃ à C₄ ramifié, préférentiellement un méthyle ou un éthyle.

6. Composé tel que revendiqué dans au moins l'une des revendications précédentes 1 à 5, dans lequel R⁸ représente -(CH₂)ₙ-phényle, dans lequel n = 1, 2, 3 ou 4 ; ou -(CH₂)ₙ-naphthyle, dans lequel n = 1, 2, 3 ou 4.

7. Composé tel que revendiqué dans au moins l'une des revendications précédentes 1 à 6,
dans lequel R⁸ représente un groupe -(CH₂)₁₋₂-phényle ou un groupe -(CH₂)₁₋₂-phényle
dans lequel le radical phényle est substitué par un groupe SO₃Y ou par un groupe nitro et/ou
dans lequel R⁹ représente un alkyle en C₁ à C₄ non ramifié ou un alkyle en C₃ à C₄ ramifié.

8. Composé tel que revendiqué dans au moins l'une des revendications précédentes 1 à 7, dans lequel
R ¹ représente un hydrogène ou SO₃Y ou SO₂CH₂CH₂OH ;
R² représente un hydrogène, SO₃Y, ou SO₂CH₂CH₂OH ou -NHCH₂CH₂OH ;
R³ et R⁴ représentent indépendamment l'un de l'autre un hydrogène un méthyle ou un méthoxy ;
R⁵ représente un hydrogène ou SO₃Y ;
R⁶ représente un hydrogène ou SO₃Y ;
R⁷ représente un hydrogène ou un méthyle ;
R⁸ représente -(CH₂)ₙ-phényle ou -(CH₂)ₙ-phényle substitué par SO₃Y, dans lequel n = 1, 2 ;
R⁹ représente un méthyle ou un éthyle ;
à condition que R⁵ et R⁶ ne représentent pas tous deux SO₃Y en même temps.

9. Procédé pour la préparation d'un composé tel que revendiqué dans au moins l'une des revendications précédentes 1 à 8 dans lequel le procédé comprend un composé de formule (II) 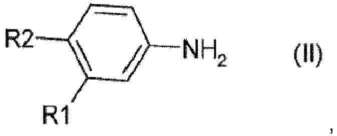 qui est diazoté et couplé à un équivalent d'un composé de formule **(III)**, 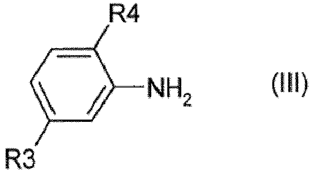 l'amine résultante de formule (IV) 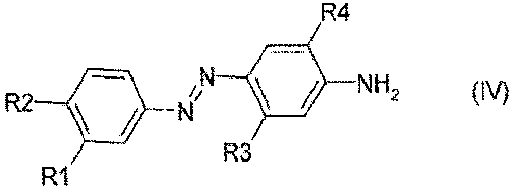 étant diazotée et couplée à un équivalent d'un composé de formule **(V)** 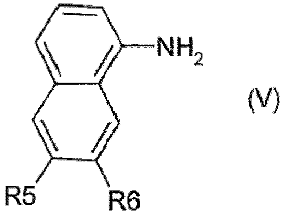 et l'amine résultante de formule (VI) 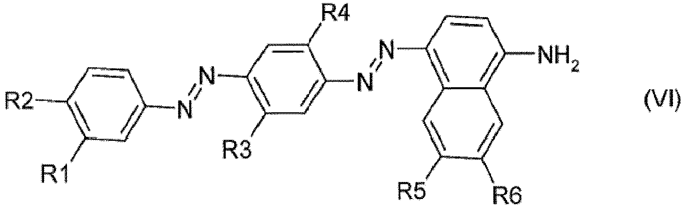 étant diazotée et couplée à un équivalent d'un composé de formule **(VII)** 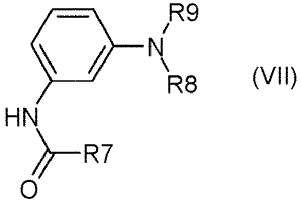 dans lequel les radicaux R¹ à R⁹ sont chacun tels que définis dans au moins l'une des revendications précédentes 1 à 8.

10. Utilisation d'un composé tel que revendiqué dans au moins l'une des revendications précédentes 1 à 8 dans un procédé de teinture ou un procédé d'impression, préférentiellement un procédé de teinture ou d'impression d'un substrat, en particulier d'un substrat fibreux, préférentiellement en matière fibreuse comprenant ou constituée d'au moins un polyamide naturel, préférentiellement choisie parmi la laine ou la soie, ou d'au moins un polyamide synthétique, préférentiellement choisie parmi le nylon ou des mélanges de ceux-ci.

11. Utilisation telle que revendiquée dans la revendication 10, dans laquelle un composé tel que revendiqué dans au moins l'une des revendications précédentes 1 à 8 est utilisé en tant que composant bleu dans un procédé de teinture trichromatique ou d'impression trichromatique.

12. Procédé de teinture ou d'impression d'un substrat, dans lequel le procédé est un procédé de teinture trichromatique ou d'impression trichromatique pour la fabrication d'un substrat coloré, dans lequel le composant bleu utilisé dans le procédé de teinture trichromatique ou d'impression trichromatique est un composé tel que revendiqué dans au moins l'une des revendications précédentes 1 à 8.

13. Substrat coloré préparé selon le procédé tel que revendiqué dans la revendication 12.

14. Composition de colorant comprenant au moins un composé tel que défini dans l'une quelconque des revendications 1 à 8.

15. Composition de colorant telle que revendiquée dans la revendication 14, comprenant en outre un colorant jaune et un colorant rouge.
